Europäisches Patentamt

(19) European Patent Office

Office européen des brevets

(11) EP 0 723 263 A1

# (12) EUROPEAN PATENT APPLICATION

(43) Date of publication:
24.07.1996 Bulletin 1996/30

(51) Int. Cl.$^6$: G11B 11/10

(21) Application number: 95100424.1

(22) Date of filing: 13.01.1995

(84) Designated Contracting States:
DE FR GB IT

(71) Applicant: GOLDSTAR CO. LTD.
Seoul (KR)

(72) Inventor: Kim, Eun Jin
Socho-ku, Seoul (KR)

(74) Representative: Lehn, Werner, Dipl.-Ing. et al
Hoffmann, Eitle & Partner,
Patentanwälte,
Arabellastrasse 4
81925 München (DE)

## (54) Optical pickup apparatus of a magneto-optical disk

(57)     An optical pickup apparatus of a magneto-optical disk uses a modified polarized beam divider and a single optical detector for realizing lightweight pickup and improving read-out speed by accurately detecting focusing and tracking errors and a magneto-optical signal recorded on the disk and by decreasing bulky optical system and the need of many component numbers thereof. For this purpose, a laser beam from a laser diode (100) is focused onto an optical disk (104) via a collimator lens (101), a first polarized beam divider (102) and an objective lens (103), processed to be S and P waves in the reverse order of the focusing, and reflected by the first polarized beam divider to be incident to a half wave plate (105) that rotates the polarization direction of all S wave and partial P wave by 45°. Then, a second polarized beam divider (106) separates the beam via the half wave plate into S wave and P wave to be outgoing in the same direction, and an optical detector (107) divided-by-eight detects the tracking error, focusing error and optical information signal by using a sum or difference signal of the S wave and P wave reflected by the second polarized beam divider.

FIG.2

EP 0 723 263 A1

**Description**

BACKGROUND OF THE INVENTION

1. Field of the Invention

The present invention relates to an optical pickup for recording/reading out information on/from a magneto-optical disk, and more particularly to an optical pickup apparatus of a magneto-optical disk for realizing lightweight pickup and improving read-out speed by accurately detecting focusing and tracking errors and by decreasing bulky optical system and the need of many component numbers thereof, using a modified polarized beam divider and a single optical detector.

2. Description of the Prior Art

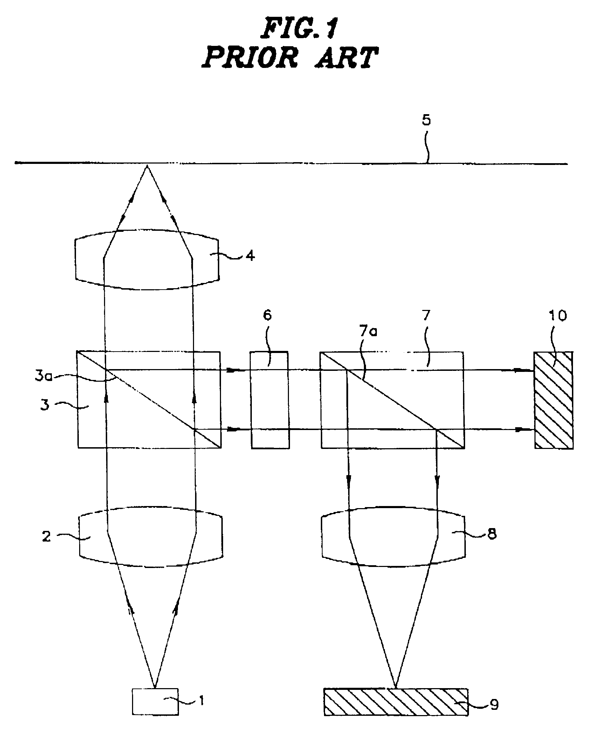

As illustrated in FIG. 1, an optical pickup apparatus of a conventional magneto-optical disk includes a laser diode 1 for emitting a laser beam and a collimator lens 2 for allowing the laser beam emitted from the laser diode 1 to be parallel rays. Also, a first polarized beam divider 3 linearly polarizes the parallel rays via the collimator lens 2 to be P wave, and is provided with a first boundary plane 3a that reflects all S wave and partial P wave of the beam reflected from an optical disk 5 and transmits remaining P wave. An objective lens 4 focuses the P wave linearly polarized via the first polarized beam divider 3 onto the optical disk 5. After the beam reflected in accordance with the existence of information recorded on the optical disk 5 is again permitted to be parallel rays via the objective lens 4, a half wave plate 6 receives all S wave and partial P wave reflected by the first boundary plane 3a of the first polarized beam divider 3 to rotate the polarization direction by 45°. A second polarized beam divider 7 separates the beam which has been rotated by 45° via the half wave plate 6 into the S wave and P wave to reflect all S wave by means of a second boundary plane 7a thereof and to transmit all P wave. A cylindrical lens 8 induces astigmatism to the S wave reflected by the second boundary plane 7a of the second polarized beam divider 7, and first and second optical detectors 9 and 10 detect a focusing error and optical information by the incident beam of the S wave focused by the cylindrical lens 8 and the P wave having passed through the second polarized beam divider 7.

In the optical pickup apparatus of the conventional magneto-optical disk constructed as above, the laser beam emitted from the laser diode 1 becomes the parallel rays via the collimator lens 2 to thereby be incident to the first polarized beam divider 3.

The laser beam transformed to be the parallel rays via the collimator lens 2 is linearly polarized to be the P wave, and then focused onto the optical disk 5 via the objective lens 4.

The beam of P wave focused onto the optical disk 5 is used for reading out information and detecting a servo signal.

The beam of P wave is reflected from the optical disk 5 while being incorporated with the information (i.e,, pit information or information which is elliptically polarized by magnetization direction} recorded on the optical disk 5, and again becomes the parallel rays via the objective lens 4 to be incident to the first polarized beam divider 3. At this time, when the information is recorded on the optical disk 5, the S wave is generated by the elliptical polarization by the recorded information.

The S wave is mixed with the P wave to be incident to the first polarized beam divider 3. Meantime, when the information is not recorded on the optical disk 5, the only P wave is incident to the first polarized beam divider 3.

Here, provided that the optical disk 5 has the information thereon, all S wave and partial P wave incident to the first polarized beam divider 3 are reflected by the first boundary plane 3a of the first polarized beam divider 3 to be incident to the half wave plate 6.

The beam of S wave and P wave reflected from the first polarized beam divider 3 is rotated by 45° in the polarization direction via the half wave plate 6 to maximize the sensitivity of a magneto-optical signal.

The beam having the S wave and P wave mixed with each other via the half wave plate 6 is separated into the S wave and P wave, so that the all S wave is reflected by the second boundary plane 7a to be incident to the cylindrical lens 8 and all P wave passes through the second polarized beam divider 7 to be incident to the second optical detector 10.

The beam of S wave reflected from the second boundary plane 7a of the second polarized beam divider 7 is focused via the cylindrical lens 8 which generates the astigmatism for detecting a focus error signal to be incident to the first optical detector 9.

At this time, the first and second optical detectors 9 and 10 detect an optical information signal (i.e., the magneto-optical signal) by means of a signal difference between the beams of S wave and P wave which are respectively incident to divided regions via the cylindrical lens 8 and second polarized beam divider 7.

More specifically, when the beam signal of S wave focusing onto the first optical detector 9 is denoted by Sa and that of P wave focusing onto the second optical detector 10 is Pa, the optical information signal $S_{MO}$ is obtained as:

$$S_{MO} = Sa - Pa$$

In case of grooved pit information recorded on the optical disk 5, the optical information signal (pit information) is sensed by the variation of optical amount of Sa + Pa.

The focusing error and tracking error are monitored by the first optical detector 9 divided-by-four or -six.

In order to detect the focusing error and tracking error and read out the information recorded on the magneto-optical disk, the optical pickup apparatus of the conventional magneto-optical disk employs the cylindrical lens which is inherently expensive and fastidious in its fabrication, and the optical detector thereof is independently separated into two parts to read out the information. However, such an optical system structure increases the number of optical components which in turn expands space occupied, thereby lowering read-out speed resulting from the increase of the pickup weight as well as heightening manufacturing cost.

## SUMMARY OF THE INVENTION

It is an object of the present invention to provide an optical pickup apparatus of a magneto-optical disk, wherein a modified polarized beam divider and a single optical detector are used to accurately detect focusing and tracking errors and a magneto-optical signal recorded on the magneto-optical disk, and to attain a lightweight pickup by reducing the number and size of optical components while improving read-out speed of the pickup.

To achieve the above object of the present invention, there is provided an optical pickup apparatus of a magneto-optical disk. Here, a laser beam from a laser diode is focused onto an optical disk via a collimator lens, a first polarized beam divider and an objective lens, processed to be S and P waves in the reverse order of the focusing, and reflected by the first polarized beam divider to be incident to a half wave plate. The half wave plate rotates the polarization direction of all S wave and partial P wave by 45°, a second polarized beam divider separates the beam via the half wave plate into S wave and P wave to be outgoing in the same direction, and an optical detector divided-by-eight detects the tracking error, focusing error and optical information signal by using a sum or difference signal of the S wave and P wave reflected by the second polarized beam divider.

## BRIEF DESCRIPTION OF THE DRAWINGS

The above objects and other advantages of the present invention will become more apparent by describing in detail preferred embodiments thereof with reference to the attached drawings in which:

FIG. 1 is a view for showing the construction of an optical pickup apparatus of a conventional magneto-optical disk;
FIG. 2 is a view for showing the construction of an optical pickup apparatus of a magneto-optical disk according to the present invention;
FIG 3 is a detailed block diagram showing the optical detector of FIG. 2; and
FIG. 4 show the variation of beam focusing onto the optical detector caused by changing the distance between the optical disk and objective lens, wherein
FIG. 4A shows the focusing state of the beam without involving the focusing error,
FIG. 4B shows the focusing state of the beam when the objective lens is distant from the optical disk (involving the focusing error), and
FIG. 4C shows the focusing state of the beam when the objective lens is near to the optical disk (involving the focusing error).

## DETAILED DESCRIPTION OF THE PREFERRED EMBODIMENT

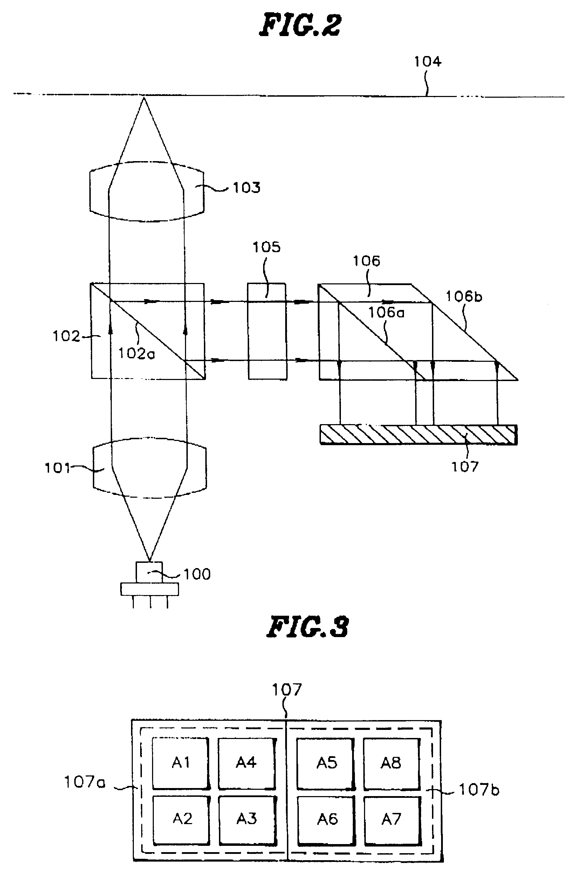

As shown in FIG. 2, an optical pickup apparatus of a magneto-optical disk according to the present invention has a laser diode 100 for omitting a laser beam, and a collimator lens 101 for allowing the laser beam emitted from the laser diode 100 to be parallel rays. A first polarized beam divider 102 linearly polarizes the parallel rays to P wave, and includes a first boundary plane 102a for reflecting all S wave and partial P wave of the beam reflected from an optical disk 104. An objective lens 103 focuses the P wave linearly polarized by the first polarized beam divider 102 onto the optical disk 104. A half wave plate 105 allows the reflected beam to be parallel rays again via the objective lens 103 in accordance with the existence of information on the optical disk 104, and rotates all S wave and partial P wave incident thereto after being reflected from the boundary plane 102a of the first polarized beam divider 102 by 45°. A second polarized beam divider 106 separates the incident beam via the half wave plate 105 into S wave and P wave to be outgoing in the same direction, and an optical detector 107 divided-by-eight detects a tracking error, a focusing error and an optical information signal by means of a sum or difference signal of the S wave and P wave which are outgoing from the second polarized beam divider 106 to focus onto every region.

In the above structure, the second polarized beam divider 106 is formed in such a manner that a right isosceles triangular prism and a parallelogram prism having an angle of 45° are combined, and a boundary plane 106a of them is coated to separate the polarized beam. Therefore, the S wave is fully reflected to the optical detector 107, the P wave is fully transmitted, and an oblique side 106b of the parallelogram prism fully reflects the P wave having passed through the boundary plane 106a.

As illustrated in FIG. 3, the optical detector 107 is separately formed of a first detecting region 107a divided into first to fourth areas A1 to A4 for detecting the beam of S wave reflected by the boundary plane 106a of the second polarized beam divider 106, and a second detecting region 107b divided into fifth to eighth areas A5 to A8 for detecting the beam of P wave reflected from the oblique side 106b of the second polarized beam divider 106.

Hereinafter, the operation and effect of the optical pickup apparatus of the magneto-optical disk according to the present invention constructed as above will be described in detail with reference to FIGS. 2 to 4.

To begin with, the laser beam emitted from the laser diode 100 becomes the parallel rays via the collimator lens 101 to be incident to the first polarized beam divider 102.

The laser beam transformed into the parallel rays via the collimator lens 101 is linearly polarized to the P wave through the first polarized beam divider 102, and then focusing onto the optical disk 104 through the objective lens 103.

The beam of P wave is reflected from the optical disk 104 while containing the information (i.e., pit information or information which is elliptically polarized by the magnetization direction) recorded on the optical disk 104, and again changed into the parallel rays via the objective lens 103 to be incident to the first polarized beam divider 102. At this time, when the information is recorded on the optical disk 104, the S wave is generated by an elliptical polarization of the recorded information.

The S wave is mixed with the P wave to be incident to the first polarized beam divider 102. However, when the information is not recorded on the optical disk 104, the only P wave is incident to the first polarized beam divider 102.

If the information is recorded on the optical disk 104, all S wave and partial P wave incident to the first polarized beam divider 102 are reflected by the first boundary plane 102a of the first polarized beam divider 102 to be linearly polarized, thereby being incident to the half wave plate 105.

The polarization direction of the beam of S wave and P wave reflected by the first polarized beam divider 102 is rotated by 45° via the half wave plate 105 to maximally correct a magneto-optical signal.

The beam of S wave mixed with P wave having the polarized angle of 45° rotated by the half wave plate 105 is incident to the second polarized beam divider 106.

The second polarized beam divider 106 formed by combining the right isosceles triangular prism and the parallelogram prism having an angle of 45° has the polarization-coated boundary plane 106a to fully reflect the S wave and to fully transmit the P wave, which are incident thereto.

Thus, all S wave incident to the second polarized beam divider 106 is reflected by the boundary plane 106a to be incident to the first detecting region 107a of the optical detector 107, and the P wave transmitting through the boundary plane 106a is fully reflected by the oblique side 106b of the second polarized beam divider 106 to be incident to the second detecting region 107b of the optical detector 107.

The optical detector 107 detects the optical information signal $S_{MO}$, tracking error signal TES and focusing error signal FES by means of the sum or difference signal of the beam of S wave incident to the first detecting region 107a and the beam of P wave incident to the second detecting region 107b.

In more detail, the optical information signal (i.e., the magneto-optical signal) $S_{MO}$ can be obtained as below, provided that the signals of S wave and P wave focusing onto the first to eighth areas A1 to A8 of the first and second detecting regions 107a and 107b divided-by-eight are denoted by SA1 to SA8;

$$S_{MO} = (SA1+SA2+SA3+SA4) - (SA5+SA6+SA7+SA8) \qquad \text{⟨equation 1⟩}$$

Also, the tracking error signal TES is written as follows, using the Push-pull rule:

$$TES = (SA1+SA4+SA5+SA8) - (SA2+SA3+SA6+SA7) \qquad \text{⟨equation 2⟩}$$

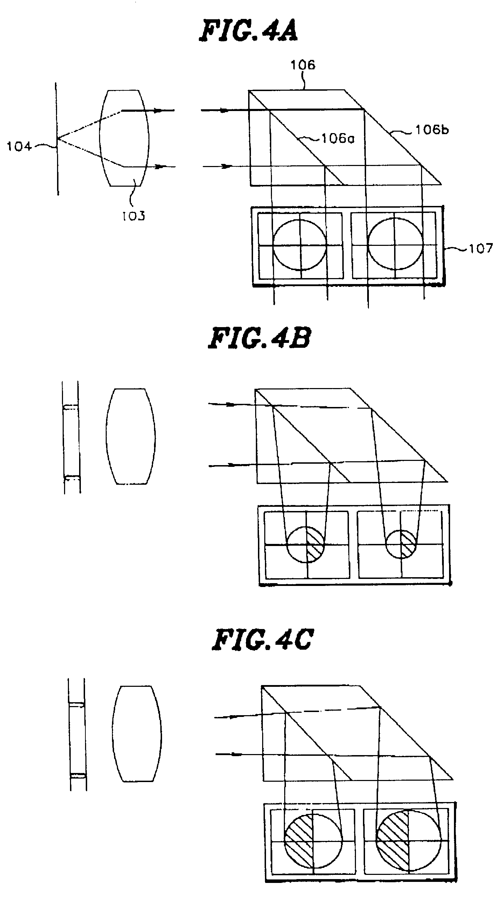

As shown in FIG. 4, the focusing error signal FES can be obtained by the signal difference of the S wave and P wave focusing onto the first to eighth areas A1 to A8 of the optical detector 107 in view of the threshold angle rule in accordance with the changes distance between the optical disk 104 and objective lens 103.

In other words, as shown in FIG. 4A, when the optical disk 104 is correctly placed, respective beams are focusing onto the center of the optical detector 107. Consequently, the first and second areas A1 and A2 are symmetrical to the third and fourth areas A3 and A4 of the first detecting region 107a, and the fifth and sixth areas A5 and A6 are symmetrical to the seventh and eighth areas A7 and A8 of the second detecting region 107b, so that the focusing error FES is not exist (i.e., FES = 0).

On the other hand, when the objective lens 103 is distant from the optical disk 104 as shown in FIG. 4B, or when the objective lens 103 is near to the optical disk 104 as shown in FIG. 4C, the beam sizes obtained in the first and second detecting regions 107a and 107b are different from each other: i.e., the beam size of the first detecting region is larger than that of the second detecting region in case of FIG. 4B, and that of the first detecting region is smaller than the second detecting region in case of FIG. 4C.

Accordingly, the focusing error signal FES is expressed by:

$$FES = (SA1+SA2+SA5+SA6) - (SA3+SA4+SA7+SA8) \qquad \text{(equation 3)}$$

In this way, the optical information signal, tracking error signal and focusing error signal are obtained by equations 1, 2 and 3, so that the focusing and tracking can be adjusted by moving the objective lens 103 up-and-down or right-to-left direction by means of an actuator (not shown) when the focusing and tracking are not correct.

An optical pickup apparatus of a magneto-optical disk according to the present invention as described above adopts a modified polarized beam divider and a single optical detector to accurately detect a focusing error, a tracking error and a magneto-optical signal recorded on a disk while reducing the number and weight of optical system components, thereby attaining a light-weight pickup and improving read-out speed. Furthermore, the modified polarized beam divider is employed to obtain a focusing error signal by using a threshold angle rule with respect to P wave and S wave, respectively, which in turn enhances sensitivity.

While the present invention has been particularly shown and described with reference to particular embodiment thereof, it will be understood by those skilled in the art that various changes in form and details may be effected therein without departing from the spirit and scope of the invention as defined by the appended claims.

## Claims

1. An optical pickup apparatus of a magneto-optical disk comprising:
   a laser diode being a light source;
   a collimator lens for allowing a laser beam emitted from said laser diode to be parallel rays;
   first polarized beam dividing means for linearly polarizing said parallel rays to P wave, and being provided with a first boundary plane for reflecting all S wave and partial P wave reflected from an optical disk;
   an objective lens for focusing said P wave to said optical
   a half wave plate for receiving all S wave and partial P wave reflected by said first polarized beam dividing means to rotate the polarization direction by 45°;
   second polarized beam dividing means for separating the beam incident via said half wave plate into S wave and P wave to allow said S and P waves to be outgoing in the same direction; and
   an optical detector having a first detecting region and a second detecting region for respectively detecting the S wave and P wave reflected by said second polarized beam dividing means to thereby detect a tracking error, a focusing error and an optical information signal.

2. An optical pickup apparatus of a magneto-optical disk as claimed in claim 1, wherein said second polarized beam dividing means is formed of a right isosceles triangular prism and a parallelogram prism having an angle of 45° to allow a boundary plane of said prisms to fully reflect said incident S wave and to fully transmit said P wave, an oblique side of said parallelogram prism for fully reflecting the transmitted P wave.

3. An optical pickup apparatus of a magneto-optical disk as claimed in claim 2, wherein said boundary plane of said second polarized beam dividing means is coated to separate the polarized beam.

4. An optical pickup apparatus of a magneto-optical disk as claimed in claim 1, wherein said first and second detecting regions of said optical detector are divided-by-four, respectively.

# FIG.1
# PRIOR ART

# FIG.2

# FIG.3

## FIG.4A

## FIG.4B

## FIG.4C

European Patent Office

**EUROPEAN SEARCH REPORT**

Application Number

EP 95 10 0424

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 469 580 (SONY CORP) 5 February 1992 * column 11, line 2 - column 13, line 2; figures 5,6 * * column 6, line 18 - line 36 * | 1-4 | G11B11/10 |
| X | EP-A-0 439 876 (HITACHI MAXELL) 7 August 1991 * column 3, line 40 - column 16, line 21; figures * | 1-4 | |
| X | DE-A-38 02 538 (OLYMPUS OPTICAL CO) 11 August 1988 * the whole document * | 1,2 | |
| X | EP-A-0 559 452 (OMRON TATEISI ELECTRONICS CO) 8 September 1993 * column 6, line 50 - column 14, line 51; figures * | 1-4 | |
| A | EP-A-0 620 550 (SONY CORP) 19 October 1994 * the whole document * | 1-4 | TECHNICAL FIELDS SEARCHED (Int.Cl.6) G11B |

The present search report has been drawn up for all claims

| Place of search | Date of completion of the search | Examiner |
|---|---|---|
| THE HAGUE | 22 June 1995 | Nanos, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document